# EUROPÄISCHE PATENTANMELDUNG

(11) **EP 4 763 402 A1**
(43) Veröffentlichungstag der Anmeldung: **24.06.2026**
(21) Anmeldenummer: 24222831.0
(22) Anmeldetag: 23.12.2024
(51) Int. Cl.: B23K 26/14, B23K 26/70

(54) **LASERBEARBEITUNGSDÜSE, DÜSENAUFNAHME FÜR EINE LASERBEARBEITUNGSDÜSE UND LASERBEARBEITUNGSKOPF**

(71) Anmelder: Bystronic Laser AG, 3362 Niederönz (CH)
(72) Erfinder: Lüdi, Andreas, 3400 Burgdorf (CH); Binggeli, René, 4932 Lotzwil (CH); Schwind, Tobias, 3360 Herzogenbuchsee (CH); Lüdi, Tobias, 3414 Oberburg (CH); Tramontano, Marco, 8045 Zürich (CH)
(74) Vertreter: Fink Numrich Patentanwälte PartmbB

(57) **Zusammenfassung**

Die Erfindung betrifft eine Laserbearbeitungsdüse (1) für eine Düsenaufnahme (6) mit einer Düsenaufnahmeschnittstelle (20) einer Laserbearbeitungsmaschine, wobei zumindest eine Kontaktfläche (22) zwischen der Laserbearbeitungsdüse (1) und einem an der Düsenaufnahme (6) befindlichen Kühlkörper (23) vorgesehen ist, dadurch gekennzeichnet, dass in der, die zumindest eine Kontaktfläche (22) zur Düsenaufnahme (6) hin bildenden Oberfläche der Laserbearbeitungsdüse (1) Vertiefungen (25) und/oder Erhebungen (25) eingebracht sind.

## Beschreibung

Die Erfindung betrifft eine Laserbearbeitungsdüse, eine Düsenaufnahme für eine Laserbearbeitungsdüse sowie einen Laserbearbeitungskopf für eine Laserbearbeitungsmaschine.

Bei der Laserbearbeitung von metallischen Werkstücken, wie z.B. Metallblechen, ist es bekannt, mittels eines Laserstrahls Werkstückteile mit vorbestimmten Formen und Abmessungen aus einem Werkstück auszuschneiden. Der Laserstrahl tritt dabei aus einem Laserbearbeitungskopf aus, der über das Werkstück bewegt wird. Am Laserbearbeitungskopf ist in der Regel eine Laserbearbeitungsdüse vorgesehen, durch welche der Laserstrahl der zu bearbeitende Stelle am Werkstück zugeführt wird.

In als Laserstrahlschneidmaschinen ausgebildeten Laserbearbeitungsmaschinen wird typischerweise ein Schneidgas zum Schneiden von Teilen aus metallischen Werkstücken, z.B. Blechtafeln, Metallprofilen oder Metallrohren, genutzt. Derartige Laserstrahlschneidmaschinen weisen eine Laserleistung von wenigstens 1 kW auf. Das Schneidgas hat primär die Aufgabe, das geschmolzene Material des Werkstücks aus dem Schnittspalt auszutreiben. Weitere Aufgaben des Schneidgases sind die Kühlung des Materials und eine Schutzgaswirkung insbesondere gegen Oxidation.

Es gibt verschiedene Arten von eingesetzten Schneidgasen: Beim Sauerstoffschneiden wird Sauerstoff als reaktives Gas verwendet. Dabei werden typischerweise geringe Schnittgeschwindigkeiten und eine gute Schnittqualität, vor allem bei höheren Blechdicken erzielt. Das Sauerstoff- bzw. Brennschneiden geht mit einer Oxidation einher, was bei gewissen Materialien unerwünscht ist. Ist die Oxidation unkritisch, so steht mit dem Brennschneiden ein äußerst performanter Prozess zur Verfügung. Beim Schmelzschneiden kann reiner Stickstoff zum Austreiben der Schmelze verwendet werden. Hierbei sind, im Gegensatz zu einer Verwendung von Sauerstoff als Schneidgas, höhere Schnittgeschwindigkeiten möglich und es wird eine hinreichend gute Schnittqualität erhalten. Ferner kann als Schneidgas Druckluft anstelle von reinem Stickstoff zum Schneiden verwendet werden oder auch ein Mischgas, das sowohl Sauerstoff als auch Stickstoff und/oder andere Gase enthält.

Beim Brennschneidprozess hat es sich gemäß EP 4201576A1 als noch vorteilhafter erwiesen, wenn die Fokuslage des Bearbeitungslasers deutlich oberhalb des Bleches zu liegen kommt. Besonders vorteilhaft ist diese Einstellung bei hoher Laserleistung, insbesondere >10kW und bei dickeren Metallblechen >20mm. Für gewisse Schmelz- oder Mixedgas-Schneidprozesse, wie z.B. zur Erzeugung besonders breiter Schnittspalte können ähnliche Fokuslagen ebenfalls vorteilhaft sein. Die Schneidkopfoptik wird in diesem Fall so eingestellt, dass der Fokuspunkt des Laserstrahls eine Distanz zur Materialoberkante aufweist. Dabei ist diese Distanz meistens größer als der Abstand der Laserbearbeitungsdüse zum zu bearbeitenden Werkstück, was dazu führt, dass der Fokus innerhalb der Düse, d.h. oberhalb der Düsenöffnung liegt. Vorteil davon ist primär, dass die Düsenöffnung auch als optische Blende des Laserstrahls fungiert und Laserrandstrahlung abschneidet (bzw. mindestens teilweise absorbiert), was zu einem besonders schönen Schnitt führen kann.

Allgemein entsteht durch die Laserbearbeitung von Werkstücken entlang des Laserstrahlverlaufs Wärme, die die entsprechenden Bauteile der Laserbearbeitungsmaschine, insbesondere die Laserbearbeitungsdüse, erhitzt. Bei einer Fokuslage oberhalb des zu bearbeitenden Werkstücks, wie vorhergehend beschrieben, kann die Erhitzung, insbesondere der Laserbearbeitungsdüse, stärker ausgeprägt sein als bei einer Fokuslage auf Höhe des Werkstücks oder in diesem.

Da eine Erhitzung der Bauteile einen negativen Einfluss auf die Qualität der Laserbearbeitung oder die Lebensdauer der eingesetzten Bauteile hat, ist eine entsprechende Kühlung der betroffenen Bauteile, insbesondere der Laserbearbeitungsdüse, sinnvoll.

Aus dem Stand der Technik sind hierzu verschiedene Kühlverfahren bekannt. Die einfachste Version einer Temperaturregulierung ist das Kühlen der Laserbearbeitungsdüse durch Luftkonvektion, bei welcher die Wärme an die vorbeiströmende Umgebungsluft abgegeben wird.

Insbesondere bei höheren Bearbeitungsleistungen reicht diese Art der Kühlung jedoch nicht aus, weswegen aus dem Stand der Technik ebenfalls kühlmittelgekühlte, insbesondere kühlfluidgekühlte, Laserbearbeitungsdüsen bekannt sind.

Im Normalfall ist die eigentliche Laserbearbeitungsdüse, meistens aus einem metallischen Material wie beispielsweise Kupfer bestehend, ein Verschleißteil, welches über eine Schnittstelle lösbar mit dem Laserbearbeitungskopf verbunden wird. Neben den bekannten Steck- und Bajonettverschlussverbindungen haben sich in der Praxis haben dafür Schraubverbindungen bestehend aus einem Innengewinde an der Düsenaufnahme und einem Außengewinde an der Laserbearbeitungsdüse bewährt.

Die WO 2021051734 A1 zeigt eine Anordnung zur Aufnahme einer flüssigkeitsgekühlten Laserbearbeitungsdüse mit einem mehrteiligen Aufbau, bestehend aus einem ersten und einem zweiten Isolierblock, einem Kupferring als Kühlkörper und einem Metallgehäuse. Der Kupferring fungiert hier als wärmeleitendes Element und bildet einen flüssigkeitsgefüllten Kühlkanal aus, der in Richtung Laserbearbeitungskopf durch den dort befindlichen Isolierblock abgedichtet wird. Die Laserbearbeitungsdüse besitzt hierbei einen flächigen Kontakt zum als Kühlkörper fungierenden eingesetzten Kupferring.

Die WO 2019021641 A1 offenbart ebenfalls eine Laserbearbeitungsdüse, bei welcher eine Oberfläche einen flächigen Kontakt zu einem Kühlkörper besitzt, wobei hier eine Nut in der Oberseite der Laserbearbeitungsdüse integriert ist, die die Verbindung zwischen Düse und Laserbearbeitungskopf vereinfacht, da die Kontaktfläche verringert wird. Die Oberfläche des Kühlkörpers, die die Kontaktfläche mit der Laserbearbeitungsdüse bildet, ist eben gestaltet.

Die vorgenannten Kühlvorrichtungen bieten Lösungen für die direkte oder indirekte kühlmittelbasierte, insbesondere flüssigkeitsbasierte Kühlung einer Laserbearbeitungsdüse bzw. einer Düsenaufnahme für eine Laserbearbeitungsdüse. Sie weisen dabei den Nachteil auf, dass entweder der Kühlkörper der Kühlvorrichtung keinen unmittelbaren Kontakt zur Laserbearbeitungsdüse besitzt oder dass die Kontaktfläche zwischen Laserbearbeitungsdüse und Kühlkörper gering ist, was einen eingeschränkten Wärmeübergang zur Folge hat. Weiterhin weist die Lösung, die in der WO 2019021641 A1 offenbart ist, den Nachteil auf, dass die Kontaktfläche zur zwischen Laserbearbeitungsdüse und Kühlkörper durch die einseitige Nut innerhalb der Oberfläche der Laserbearbeitungsdüse die Kontaktfläche deutlich verringert, was ebenfalls einen negativen Einfluss auf die Effektivität der Wärmeübertragung von Laserbearbeitungsdüse auf Kühlkörper hat.

Aufgabe der dieser Anmeldung zugrundeliegenden Erfindung ist es daher, eine Laserbearbeitungsdüse bereitzustellen, die einen verbesserten Wärmeaustausch mit der Düsenaufnahme ermöglicht. Weiterhin ist es eine Aufgabe der Erfindung, einen entsprechenden Laserbearbeitungskopf und eine verbesserte Düsenaufnahme bereitzustellen.

Diese Aufgabe wird durch die in Patentanspruch 1 beschriebene Laserbearbeitungsdüse für eine Laserbearbeitungsmaschine bzw. durch die in Patentanspruch 8 beschriebene Düsenaufnahme, insbesondere gekühlte Düsenaufnahme, bzw. durch den in Patentanspruch 15 beschriebenen Laserbearbeitungskopf gelöst.

In der erfindungsgemäßen Laserbearbeitungsdüse für eine Düsenaufnahme, insbesondere eine gekühlte Düsenaufnahme, mit einer Düsenaufnahmeschnittstelle einer Laserbearbeitungsmaschine ist zumindest eine Kontaktfläche zwischen der Laserbearbeitungsdüse und einem an der Düsenaufnahme befindlichen Kühlkörper vorgesehen. Dabei sind in der, die zumindest eine Kontaktfläche zur Düsenaufnahme hin bildenden Oberfläche der Laserbearbeitungsdüse Vertiefungen und/oder Erhebungen eingebracht.

Der Vorteil der beschriebenen Erfindung gegenüber dem bekannten Stand der Technik ist der, dass die hier beanspruchte Laserbearbeitungsdüse durch die eingebrachten Vertiefungen und/oder Erhebungen mit entsprechenden Vertiefungen und/oder Erhebungen in der, die Kontaktfläche zwischen Düsenaufnahme und Laserbearbeitungsdüse bildenden Oberfläche der Düsenaufnahme korrelieren, und dadurch die effektive Wärmeübertragungsfläche zwischen Laserbearbeitungsdüse und Düsenaufnahme vergrößert wird, was eine sehr effiziente Kühlung der Laserbearbeitungsdüse verwirklicht. Dadurch ist es möglich, auch mit hohen Laserbearbeitungsleistungen schneiden zu können, was im Ergebnis die Prozesseffizienz erhöht. Weiterhin sind durch die beschriebene Art der Kühlung auch Laserbearbeitungsverfahren anwendbar, bei denen die Fokuslage des Laserbearbeitungsstrahls innerhalb der Laserbearbeitungsdüse liegt, was zu einem besonders hohen Wärmeeintrag in die Laserbearbeitungsdüse führt. Insbesondere lässt sich durch die effektive Kühlung auch die Blendenfunktion der Düse, bei welcher ein Teil des Laserbearbeitungsstrahls im Randbereich geschnitten wird, bei höheren Bearbeitungsleistungen effektiv nutzen.

Die Vertiefungen und/oder Erhebungen in den Oberflächen der Laserbearbeitungsdüse und dem Kühlkörper der Düsenaufnahme sind jeweils bezogen auf eine Referenzhöhe, die der Höhe der Kontaktfläche zwischen Laserbearbeitungsdüse und Kühlkörper der Düsenaufnahme ohne Vertiefungen und/oder Erhebungen entspricht.

Bevorzugt sind die erfindungsgemäßen Erhebungen und/oder Vertiefungen so ausgestaltet, dass die Erhebungen im Bereich der die Kontaktfläche bildenden Oberfläche der Laserbearbeitungsdüse angeordnet sind, währenddessen die korrelierenden Vertiefungen im Bereich der die Kontaktfläche bildenden Oberfläche des Kühlkörpers der Düsenaufnahme liegen. Dies hat den Vorteil, dass die Wärmeübertragung weiter erhöht sein kann, wenn die Laserbearbeitungsdüse aus einem im Gegensatz zum Kühlkörper wärmeleitfähigeren Material ist.

Einer Ausführungsform der erfindungsgemäßen Laserbearbeitungsdüse zeichnet sich dadurch aus, dass die Vertiefungen und/oder Erhebungen in der zumindest einen, die Kontaktfläche zur Düsenaufnahme hin bildenden Oberfläche der Laserbearbeitungsdüse in Form von regelmäßigen geometrischen Konturen eingebracht sind. Die Höhe der eingebrachten geometrischen Konturen liegt vorzugsweise in einem Bereich von 0,1 mm - 1 mm. Diese Art der Konturen weist den Vorteil auf, dass es durch die regelmäßige Form der Konturen besser möglich ist, die Erhebungen und/oder Vertiefungen innerhalb der Oberfläche der Laserbearbeitungsdüse mit denen innerhalb der Düsenaufnahme korrelierend zu gestalten.

In einer bevorzugten Variante weisen die Vertiefungen und/oder Erhebungen im Querschnitt die Form von Dreiecksprofilen auf, die mit entsprechenden Vertiefungen und/oder Erhebungen im Querschnitt in Form von Dreiecksprofilen, die in der, die Kontaktfläche bildenden Oberfläche der Düsenaufnahme eingebracht sind, korrelieren. Die Dreiecksprofile können als gleichseitiges Dreieck, gleichschenkliges Dreieck oder als ungleichseitiges Dreieck ausgebildet sein.

In einer weiteren bevorzugten Variante weisen die Vertiefungen und/oder Erhebungen im Querschnitt die Form von viereckigen Profilen auf, die mit entsprechenden Vertiefungen und/oder Erhebungen im Querschnitt in Form von viereckigen Profilen, die in der, die Kontaktfläche bildenden Oberfläche der Düsenaufnahme eingebracht sind, korrelieren. Diese Ausgestaltung vergrößert die effektive Wärmeübertragungsfläche gegenüber den vorigen Ausführungsformen noch weiter. Die viereckigen Profile können beispielsweise in Rechteckform, Trapezform oder als ungleichmäßiges Viereck ausgebildet sein.

Eine weitere Ausführungsform der erfindungsgemäßen Laserbearbeitungsdüse zeichnet sich dadurch aus, dass die Vertiefungen und/oder Erhebungen in der zumindest einen, die Kontaktfläche zur Düsenaufnahme hin bildenden Oberfläche der Laserbearbeitungsdüse unregelmäßig erzeugte Vertiefungen und Erhebungen sind. Diese Gestaltung lässt die Möglichkeit, die Vertiefungen und Erhebungen fertigungsoptimiert einzubringen oder in der Positionierung hinsichtlich der Wärmeüberragung zu optimieren.

Eine bevorzugte Ausführungsform zeichnet sich dadurch aus, dass die Vertiefungen und Erhebungen als konzentrisch zu einer zentralen Düsenachse umlaufende, insbesondere ringförmig umlaufende, Profile ausgebildet sind. Diese Ausgestaltung ist insbesondere für den möglichst verschleißarmen Düsenwechsel hilfreich, da die Drehachse der Laserbearbeitungsdüse beim Einsetzen in die Düsenaufnahme um dieselbe zentrale Düsenachse gedreht wird, was eine geringere Einsetzkraft erfordert.

Eine weitere bevorzugte Ausführungsform zeichnet sich dadurch aus, dass die Oberfläche der Laserbearbeitungsdüse, die die Kontaktfläche zwischen der Laserbearbeitungsdüse und dem Kühlkörper der Düsenaufnahme bildet, einen Oberflächenmittenrauwert Ra von kleiner gleich 1,6 µm und/oder eine Kontaktflächenebenheit von kleiner als 10 µm aufweist. Diese Ausführung trägt zu einer erhöhten Wärmeübertragung zwischen Düsenaufnahme und Laserbearbeitungsdüse bei, da es die Möglichkeit an Lufteinschlüssen, welche eine isolierende Wirkung haben können, im Bereich der Kontaktfläche verringert.

Die erfindungsgemäße Düsenaufnahme weist eine Düsenaufnahmeschnittstelle und einen Kühlkörper auf und dient zur Aufnahme einer erfindungsgemäßen Laserbearbeitungsdüse einer Laserbearbeitungsmaschine. Die Düsenaufnahme zeichnet sich dadurch aus, dass in der, die zumindest eine Kontaktfläche bildende Oberfläche des Kühlkörpers Vertiefungen und/oder Erhebungen ausgebildet sind. Diese Vertiefungen und/oder Erhebungen korrelieren mit den Vertiefungen und/oder Erhebungen in der, die zumindest eine Kontaktfläche bildende Oberfläche der erfindungsgemäßen Laserbearbeitungsdüse, was die effektive Wärmeübertragungsfläche zwischen Laserbearbeitungsdüse und Düsenaufnahme erhöht und somit für eine bessere Wärmeableitung von der Laserbearbeitungsdüse weg sorgt.

Eine weitere bevorzugte Ausführungsform der erfindungsgemäßen Düsenaufnahme sieht vor, dass die Vertiefungen und/oder Erhebungen in Form von regelmäßigen geometrischen Konturen in die, die zumindest eine Kontaktfläche bildende Oberfläche der Düsenaufnahme eingebracht sind. Diese Art der Konturen weist den Vorteil auf, dass es durch die regelmäßige Form der Konturen besser möglich ist, die Erhebungen und/oder Vertiefungen innerhalb der Oberfläche der Düsenaufnahme mit denen innerhalb der Laserbearbeitungsdüse korrelierend zu gestalten.

In einer bevorzugten Variante weisen die Vertiefungen und/oder Erhebungen in der zumindest einen, die Kontaktfläche zur Laserbearbeitungsdüse hin bildenden Oberfläche der Düsenaufnahme im Querschnitt die Form von Dreiecksprofilen auf, die mit entsprechenden Vertiefungen und/oder Erhebungen im Querschnitt in Form von Dreiecksprofilen, die in der die Kontaktfläche bildenden Oberfläche der Laserbearbeitungsdüse eingebracht sind, korrelieren.

In einer weiteren bevorzugten Variante weisen die Vertiefungen und/oder Erhebungen in der zumindest einen, die Kontaktfläche zur Laserbearbeitungsdüse hin bildenden Oberfläche der Düsenaufnahme im Querschnitt die Form von viereckigen Profilen auf, die mit entsprechenden Vertiefungen und/oder Erhebungen im Querschnitt in Form von viereckigen Profilen, die in der die Kontaktfläche bildenden Oberfläche der Laserbearbeitungsdüse eingebracht sind, korrelieren. Diese Ausgestaltung vergrößert die effektive Wärmeübertragungsfläche gegenüber den vorigen Ausführungsformen noch weiter. Die viereckigen Profile können beispielsweise in Rechteckform, Trapezform oder als ungleichmäßiges Viereck ausgebildet sein.

Eine weitere Ausführungsform der erfindungsgemäßen Düsenaufnahme zeichnet sich dadurch aus, dass die Vertiefungen und/oder Erhebungen in der zumindest einen, die Kontaktfläche zur Laserbearbeitungsdüse hin bildenden Oberfläche der Düsenaufnahme unregelmäßig erzeugte Vertiefungen und Erhebungen sind. Diese Gestaltung lässt die Möglichkeit, die Vertiefungen und Erhebungen fertigungsoptimiert einzubringen oder in der Positionierung hinsichtlich der Wärmeüberragung zu optimieren.

Eine bevorzugte Ausführungsform zeichnet sich dadurch aus, dass die Vertiefungen und/oder Erhebungen in der zumindest einen, die Kontaktfläche zur Laserbearbeitungsdüse hin bildenden Oberfläche der Düsenaufnahme als konzentrisch zu einer zentralen Düsenachse umlaufende Profile ausgebildet sind. Die zentrale Düsenachse ist die Mittelachse der in die Düsenaufnahme eingesetzte Laserbearbeitungsdüse. Diese Ausgestaltung ist insbesondere für den möglichst verschleißarmen Düsenwechsel hilfreich, da die Drehachse der Laserbearbeitungsdüse beim Einsetzen in die Düsenaufnahme um dieselbe zentrale Düsenachse gedreht wird, was eine geringere Einsetzkraft erfordert.

In einer weiteren Variante der erfindungsgemäßen Düsenaufnahme für eine Laserbearbeitungsdüse weist die Oberfläche der Düsenaufnahme, die die Kontaktfläche zwischen dem Kühlkörper und der Laserbearbeitungsdüse ausbildet, als Oberflächenrauheit einen Mittenrauwert Ra von kleiner gleich 1.6 µm und/oder eine Kontaktflächenebenheit von kleiner als 10 µm auf. Dies bietet den Vorteil, dass die Effektivität der Wärmeübertragung zwischen der Laserbearbeitungsdüse und dem Kühlkörpers noch weiter gesteigert wird, da die Menge der isolierenden Lufteinschlüsse zwischen Kühlkörper und Laserbearbeitungsdüse minimiert wird.

Für eine effektive Wärmeableitung wird für die Kühlung der Düsenaufnahme vorzugsweise eine Kühlflüssigkeit eingesetzt, die eine spezifische Wärmekapazität von mindestens 1 kJ/kgK aufweist.

Besonders bevorzugt wird für die Düsenaufnahme als Kühlflüssigkeit Wasser und insbesondere deionisiertes Wasser eingesetzt, was eine gute Verfügbarkeit hat und mit den anderen eingesetzten Materialien im Kontakt keine ungewünschten Reaktionen erzeugt.

Weiterhin wird ein Laserbearbeitungskopf für eine Laserbearbeitungsmaschine beansprucht, der sich dadurch auszeichnet, dass die Kontaktflächen an der Laserbearbeitungsdüse und an der Düsenaufnahme zueinander korrespondierende Vertiefungen und Erhebungen aufweisen, so dass Erhebungen an der zumindest einen Kontaktfläche der Laserbearbeitungsdüse in korrespondierende Vertiefungen an der zumindest einen Kontaktfläche der Düsenaufnahme und Erhebungen an der zumindest einen Kontaktfläche der Düsenaufnahme in korrespondierende Vertiefungen an der zumindest einen Kontaktfläche der Laserbearbeitungsdüse eingreifen, wenn die Laserbearbeitungsdüse an der Düsenaufnahme angeordnet ist. Dieser erfindungsgemäße Laserbearbeitungskopfweist eine effektive Düsenkühlung auf und ist in der Lage, Laserbearbeitungsprozesse mit hohen Leistungen effizient durchzuführen. Insbesondere lassen sich Laserbearbeitungsprozesse, bei welchen die Blendenfunktion der Laserbearbeitungsdüse zum Beschneiden des Laserbearbeitungsstrahls verwendet wird, effektiv einsetzen, ohne die Bearbeitungsqualität oder die Lebensdauer der beanspruchten Bauteile einzuschränken.

Beispiele für mögliche Ausführungen der beanspruchten Erfindung werden in den nachfolgend beigefügten Figuren beschrieben.

Es zeigen:
Fig. 1 schematisch eine Darstellung eines Laserbearbeitungskopfes;
Fig. 2 schematisch den Aufbau einer Ausführungsform der erfindungsgemäßen Laserbearbeitungsdüse und Düsenaufnahme;
Fig. 3a und Fig 3b schematisch eine Darstellung einer erfindungsgemäßen Ausgestaltung von Erhebungen/Vertiefungen an der Kontaktfläche; und
Fig 4 schematisch eine Draufsicht auf die die Kontaktfläche bildenden Oberfläche einer Ausführungsform einer erfindungsgemäßen Laserbearbeitungsdüse mit konzentrischer Anordnung der Vertiefungen/Erhebungen.

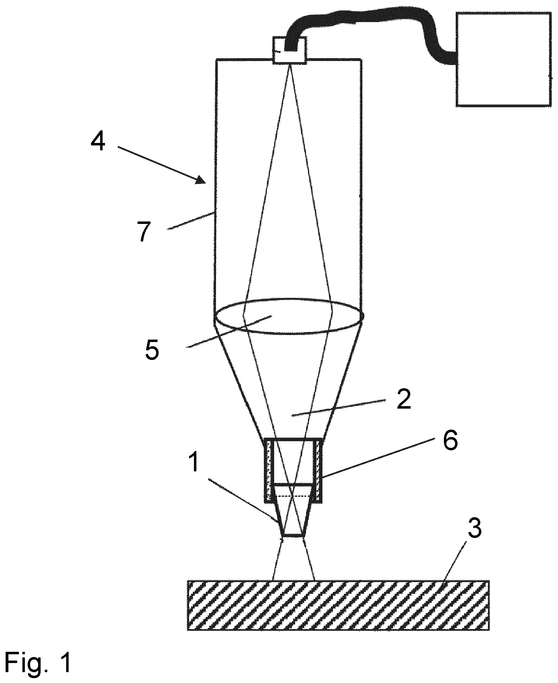

Figur 1 zeigt den schematischen Aufbau eines Laserbearbeitungskopfes 4 für eine Laserbearbeitungsmaschine bei der Bearbeitung eines Werkstückes 3 durch das Einwirken eines Laserbearbeitungsstrahls 2. Der Laserbearbeitungskopf 4 enthält die Komponenten Gehäuse 7, Fokussieroptik 5, Düsenaufnahme 6 und Laserbearbeitungsdüse 1. Es ist ersichtlich, dass der Strahlenverlauf des Laserbearbeitungsstrahls 2 durch die Fokussieroptik 5 fokussiert wird. In Figur 1 wird eine Laserbearbeitungsmethode gezeigt, bei welcher der Fokusbereich des Laserbearbeitungsstrahls 2 innerhalb der Laserbearbeitungsdüse 1 liegt, was zu einem hohen Wärmeeintrag in das Material der Laserbearbeitungsdüse 1 führt, welcher möglichst durch ein Kühlsystem abtransportiert werden muss. Hier ist ein Anwendungsfall der erfindungsgemäßen Laserbearbeitungsdüse 1 gezeigt.

Die Fokussieroptik 5 des Laserbearbeitungskopfes 4 wird in diesem Fall so eingestellt, dass der Fokuspunkt des Laserbearbeitungsstrahls 2 eine Distanz zur Materialoberkante aufweist. Dabei ist diese Distanz vorzugsweise größer als der Abstand der Laserbearbeitungsdüse 1 zu dem zu bearbeitenden Werkstück, was dazu führt, dass der Fokus innerhalb der Laserbearbeitungsdüse 1, d.h. oberhalb der Düsenöffnung, liegt. Vorteil davon ist primär, dass die Düsenöffnung dadurch auch als optische Blende des Laserbearbeitungsstrahls 1 fungiert und Laserrandstrahlung abschneidet (bzw. mindestens teilweise absorbiert), was zu einem besonders schönen Schnitt führen kann.

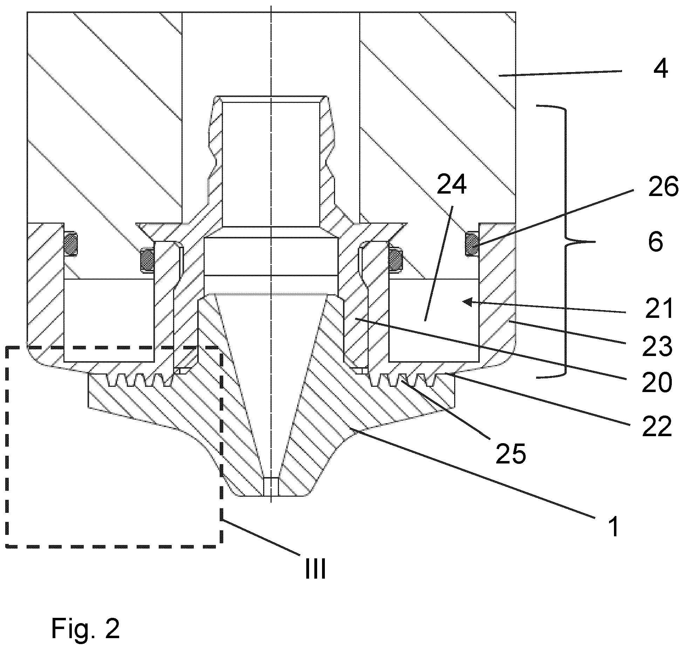

Figur 2 zeigt den schematischen Aufbau einer Ausführungsform der erfindungsgemäßen Düsenaufnahme 6 mit einer Düsenaufnahmeschnittstelle 20, und einem Kühlkörper 23, wobei die Düsenaufnahmeschnittstelle 20 als separates, im Kühlkörper 23 angeordnetes, Hülsenelement ausgebildet ist. Weiterhin ist in Figur 2 eine Laserbearbeitungsdüse 1 dargestellt, die über die Düsenaufnahmeschnittstelle 20 mit der Düsenaufnahme 6 verbunden ist und so gestaltet ist, dass sich eine direkte Kontaktfläche 22 zwischen Laserbearbeitungsdüse 1 und Düsenaufnahme 6 ausbildet. Diese Kontaktfläche ist mit erfindungsgemäßen, korrelierenden Erhebungen 25 und/oder Vertiefungen 25 in der Laserbearbeitungsdüse 1 und der Düsenaufnahme 6 ausgestattet, um die effektive Wärmeübertragungsfläche zwischen den Bauteilen Düsenaufnahme 6 und Laserbearbeitungsdüse 1 zu erhöhen.

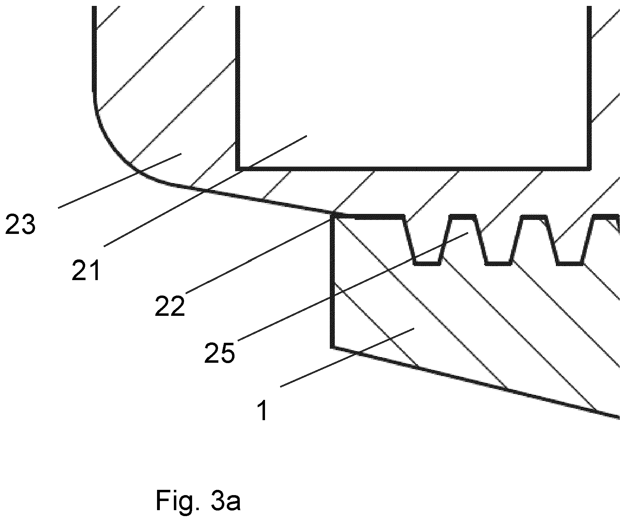

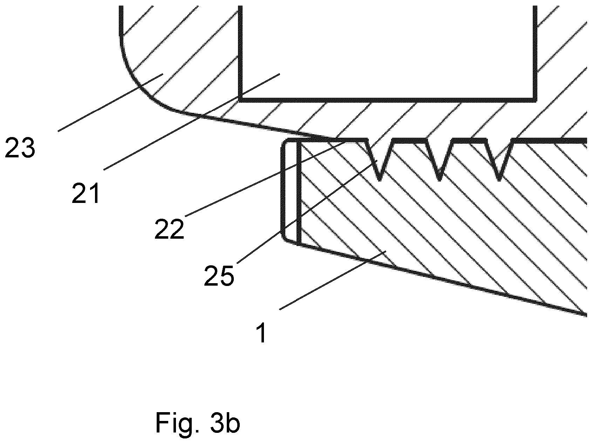

Figur 2 zeigt weiterhin, dass im Kühlkörper 23 ein Kühlkanal 21 ausgebildet ist, der zur Aufnahme eines Kühlmittels 24 dient. Dieser Kühlkanal 21 ist in Richtung Laserbearbeitungskopf 4 offen und wird durch ein entsprechend geformtes Gegenstück im Laserbearbeitungskopf 4 abgedichtet. Gezeigt ist ebenfalls ein elastisches Dichtungselement 26, was den Kühlkanal 21 entsprechend zusätzlich abdichtet. Die Düsenaufnahmeschnittstelle 20 weist in Figur 2 ein Innengewinde im Hülsenelement auf, wobei das Innengewinde in ein entsprechendes Außengewindegegenstück in der Laserbearbeitungsdüse 1 eingreift, um die Laserbearbeitungsdüse 1 mit der Düsenaufnahme 6 lösbar zu verbinden. In Figur 2 ist durch ein gestricheltes Rechteck ferner ein Ausschnitt III angedeutet, der den weiter unten beschriebenen Figuren 3a und 3b entspricht.

Figur 3 zeigt mehrere Varianten der Ausführung der für die Kühlung der Laserbearbeitungsdüse 1 entscheidenden Oberflächen von Düsenaufnahme 6 und Laserbearbeitungsdüse 1, die die Kontaktfläche 22 zwischen dem an der Düsenaufnahme 6 befindlichen Kühlkörper 23 und der Laserbearbeitungsdüse 1 ausbilden.

Figur 3a zeigt eine Gestaltung der Erhebungen 25 und/oder Vertiefungen 25 im Bereich der Kontaktfläche 22 im Querschnitt in Form von viereckigen Profilen, insbesondere in Form von trapezförmigen Profilen, wobei es in dieser Ausführung bevorzugt darauf ankommt, dass die eingearbeiteten Profile in Laserbearbeitungsdüse 1 und Kühlkörper 23 der Düsenaufnahme 6 zueinander korrelieren, damit die Laserbearbeitungsdüse 1 ordnungsgemäß auf die Düsenaufnahme 6 aufgesetzt werden kann und sich eine möglichst große Wärmeübertragungsfläche im Bereich der Kontaktfläche 22 zwischen der Laserbearbeitungsdüse 1 und der Düsenaufnahme 6 ergibt.

Weiterhin ist es wichtig, dass ungewollte Lufteinschlüsse zwischen den besagten Bauteilen im Bereich der Kontaktfläche 22 reduziert werden, da diese Lufteinschlüsse eine isolierende Wirkung haben und die Effektivität der Wärmeübertragung verringern.

Figur 3b zeigt eine Gestaltung der Erhebungen und/oder Vertiefungen im Bereich der Kontaktfläche 22 im Querschnitt in Form von Dreiecksprofilen, wobei es in dieser Ausführung ebenfalls bevorzugt darauf ankommt, dass die eingearbeiteten Profile in Laserbearbeitungsdüse 1 und Kühlkörper 23 der Düsenaufnahme 6 zueinander korrelieren, damit die Laserbearbeitungsdüse 1 ordnungsgemäß auf die Düsenaufnahme 6 aufgesetzt werden kann und sich eine möglichst große Wärmeübertragungsfläche im Bereich der Kontaktfläche 22 zwischen der Laserbearbeitungsdüse 1 und der Düsenaufnahme 6 ergibt. Weiterhin ist es wichtig, dass ungewollte Lufteinschlüsse zwischen den besagten Bauteilen im Bereich der Kontaktfläche 22 reduziert werden, da diese Lufteinschlüsse eine isolierende Wirkung haben und die Effektivität der Wärmeübertragung verringern.

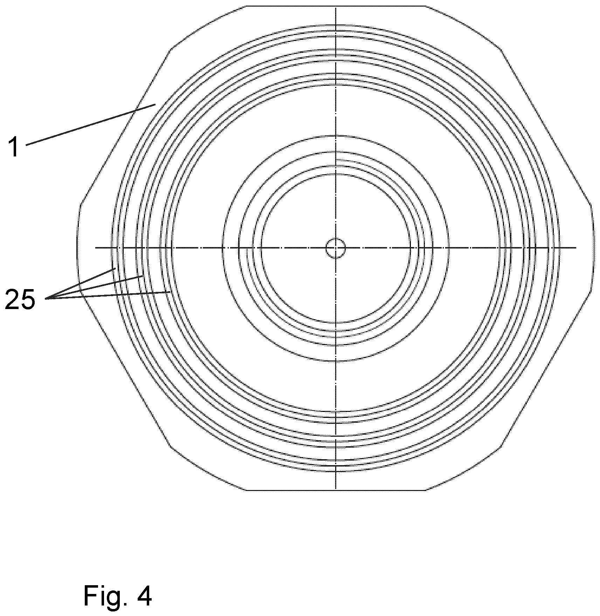

Figur 4 zeigt eine Draufsicht auf eine Variante der erfindungsgemäßen Laserbearbeitungsdüse 1. Die Darstellung zeigt, dass die Erhebungen 25 und/oder Vertiefungen 25 so angeordnet sind, dass deren Verlauf in konzentrischen Formen um die Mittelachse der Laserbearbeitungsdüse 1 herum angeordnet ist. Diese Anordnung ist insbesondere für den möglichst verschleißarmen Düsenwechsel hilfreich, da die Drehachse der Laserbearbeitungsdüse 1 beim Einsetzen in die Düsenaufnahme 6 um dieselbe zentrale Düsenachse gedreht wird, was eine geringere Einsetzkraft erfordert.

### Bezugszeichenliste

- 1: Laserbearbeitungsdüse
- 2: Laserbearbeitungsstrahl
- 3: Werkstück
- 4: Laserbearbeitungskopf
- 5: Fokussieroptik
- 6: Düsenaufnahme
- 7: Gehäuse des Laserbearbeitungskopfes
- 20: Düsenaufnahmeschnittstelle
- 21: Kühlkanal
- 22: Kontaktfläche zwischen Laserbearbeitungsdüse und Kühlkörper
- 23: Kühlkörper
- 24: Kühlmittel
- 25: Vertiefungen/Erhebungen
- 26: elastisches Dichtungselement
- 27: Kühlrippe

## Patentansprüche

1. Laserbearbeitungsdüse (1) für eine Düsenaufnahme (6) mit einer Düsenaufnahmeschnittstelle (20) einer Laserbearbeitungsmaschine, wobei zumindest eine Kontaktfläche (22) zwischen der Laserbearbeitungsdüse (1) und einem an der Düsenaufnahme (6) befindlichen Kühlkörper (23) vorgesehen ist, **dadurch gekennzeichnet, dass** in der, die zumindest eine Kontaktfläche (22) zur Düsenaufnahme (6) hin bildenden Oberfläche der Laserbearbeitungsdüse (1) Vertiefungen (25) und/oder Erhebungen (25) eingebracht sind.

2. Laserbearbeitungsdüse (1) nach Anspruch 1, **dadurch gekennzeichnet, dass** die Vertiefungen (25) und/oder Erhebungen (25) in Form von regelmäßigen geometrischen Konturen in die, die zumindest eine Kontaktfläche (22) zur Düsenaufnahme hin bildenden Oberfläche der Laserbearbeitungsdüse (1) eingebracht sind.

3. Laserbearbeitungsdüse (1) nach Anspruch 1 oder 2, **dadurch gekennzeichnet, dass** die Vertiefungen (25) und/oder Erhebungen (25) im Querschnitt die Form von Dreiecksprofilen aufweisen.

4. Laserbearbeitungsdüse (1) nach Anspruch 1 oder 2, **dadurch gekennzeichnet, dass** die Vertiefungen (25) und/oder Erhebungen (25) im Querschnitt die Form von viereckigen Profilen aufweisen.

5. Laserbearbeitungsdüse (1) nach Anspruch 1, **dadurch gekennzeichnet, dass** die Vertiefungen (25) und/oder Erhebungen (25) unregelmäßig erzeugte Vertiefungen (25) und/oder Erhebungen (25) sind.

6. Laserbearbeitungsdüse (1) nach Anspruch 1, **dadurch gekennzeichnet, dass** die Vertiefungen (25) und/oder Erhebungen (25) als konzentrisch zu einer zentralen Düsenachse umlaufende Profile ausgebildet sind.

7. Laserbearbeitungsdüse (1) nach einem der vorherigen Ansprüche, **dadurch gekennzeichnet, dass** die Oberfläche der Laserbearbeitungsdüse (1), die die zumindest eine Kontaktfläche zwischen der Laserbearbeitungsdüse (1) und dem Kühlkörper (23) der Düsenaufnahme (6) bildet, einen Oberflächenmittenrauwert Ra von kleiner gleich 1,6 µm und/oder eine Kontaktflächenebenheit von kleiner als 10 µm aufweist.

8. Düsenaufnahme (6) für eine Laserbearbeitungsmaschine zur Aufnahme einer Laserbearbeitungsdüse (1) nach einem der vorherigen Ansprüche, wobei die Düsenaufnahme (6) eine Düsenaufnahmeschnittstelle (20) und einen Kühlkörper (23) aufweist, **dadurch gekennzeichnet, dass** in der, die zumindest eine Kontaktfläche (22) bildende Oberfläche des Kühlkörpers (23) Vertiefungen (25) und/oder Erhebungen (25) ausgebildet sind.

9. Düsenaufnahme (6) nach Anspruch 8, **dadurch gekennzeichnet, dass** die Vertiefungen (25) und/oder Erhebungen (25) in Form von regelmäßigen geometrischen Konturen in die Kontaktfläche (22) eingebracht sind.

10. Düsenaufnahme (6) nach Anspruch 8 oder 9, **dadurch gekennzeichnet, dass** die Vertiefungen (25) und/oder Erhebungen (25) im Querschnitt die Form von Dreiecksprofilen aufweisen.

11. Düsenaufnahme (6) nach Anspruch 8 oder 9, **dadurch gekennzeichnet, dass** die Vertiefungen (25) und/oder Erhebungen (25) im Querschnitt die Form von viereckigen Profilen aufweisen.

12. Düsenaufnahme (6) nach Anspruch 8, **dadurch gekennzeichnet, dass** die Vertiefungen (25) und/oder Erhebungen (25) unregelmäßig erzeugte Vertiefungen (25) und Erhebungen (25) sind.

13. Düsenaufnahme (6) nach Anspruch 8, **dadurch gekennzeichnet, dass** die Vertiefungen (25) und Erhebungen (25) als konzentrisch zu einer zentralen Düsenachse umlaufende Profile ausgebildet sind.

14. Düsenaufnahme (6) nach einem der Ansprüche 8 bis 13, **dadurch gekennzeichnet, dass** die Oberfläche der Düsenaufnahme (6), die die Kontaktfläche (22) zwischen der Laserbearbeitungsdüse (1) und dem Kühlkörper (23) der Düsenaufnahme (6) bildet, einen Oberflächenmittenrauwert Ra von kleiner gleich 1,6 µm und/oder eine Kontaktflächenebenheit von kleiner als 10 µm aufweist.

15. Laserbearbeitungskopf (4) beinhaltend eine Laserbearbeitungsdüse (1) nach einem der Ansprüche 1 bis 7 und eine Düsenaufnahme (6) nach einem der Ansprüche 8 bis 14, **dadurch gekennzeichnet dass** die Kontaktflächen (22) an der Laserbearbeitungsdüse (1) und an der Düsenaufnahme (6) zueinander korrespondierende Vertiefungen (25) und/oder Erhebungen (25) aufweisen, so dass Erhebungen an der zumindest einen Kontaktfläche (22) der Laserbearbeitungsdüse (1) in korrespondierende Vertiefungen an der zumindest einen Kontaktfläche (22) der Düsenaufnahme (6) und Erhebungen (25) an der zumindest einen Kontaktfläche (22) der Düsenaufnahme (6) in korrespondierende Vertiefungen (25) an der zumindest einen Kontaktfläche (22) der Laserbearbeitungsdüse (1) eingreifen, wenn die Laserbearbeitungsdüse (1) an der Düsenaufnahme (6) angeordnet ist.
